# EUROPEAN PATENT SPECIFICATION

(11) **EP 3 113 421 B1**
(45) Date of publication and mention of the grant of the patent: **05.09.2018**
(21) Application number: 16171674.1
(22) Date of filing: 27.05.2016
(51) Int. Cl.: H04L 12/741, H04L 29/08, H04L 29/06, H04L 12/725

(54) **APPLICATION BASED ROUTING DEVICE, METHOD, AND PROGRAM**
APPLIKATIONSBASIERTE ROUTINGVORRICHTUNG, VERFAHREN UND PROGRAMM
APPAREIL, METHOD ET PROGRAMME DE ROUTAGE BASÉ SUR L'APPLICATION

(30) Priority: 30.06.2015 JP 2015131241
(43) Date of publication of application: 04.01.2017
(73) Proprietor: FUJITSU LIMITED, 211-8588 Kanagawa (JP)
(72) Inventor: SONE, Tomoyuki, Kanagawa, 211-8588 (JP)
(74) Representative: Hoffmann Eitle

(56) References cited:
- US-A1- 2003 206 523
- US-A1- 2006 227 758
- US-A1- 2015 055 657

## Description

### FIELD

The embodiments discussed herein are related to a communication device and communication performed by the communication device.

### BACKGROUND

With the miniaturization of communication equipment and the development of wireless technologies, a network including a machine or sensor that is equipped with communication equipment has been increasingly used for gathering information. Further, private networks are often used in such a network. A device in a private network transmits data to a gateway, and the gateway accordingly reports data to, for example, a server. When the gateway communicates with a server that is not situated in a private network, Network Address Port Translation (NAPT) is accordingly performed by, for example, a router that relays a communication between the gateway and the server. When data obtained in a certain private network is used in another private network, communication may occur between devices included in different private networks. Also, when the communication between devices in different private networks is performed, Network Address Port Translation is accordingly performed by a router that connects the private networks.

As a related technology, a terminal device that includes a routing table that stores therein a gateway for a constant connection and a gateway device for a temporary connection has been devised. A communication between the terminal device and a communication destination is performed through the gateway for a constant connection, but a route using the gateway device for a temporary connection is used when a route through the gateway for a constant connection is not allowed to be used. Further, a network communication system in which a transmitter information processing unit transmits data along with routing information that specifies the order in which the data passes, from the transmitter side to a destination, through routers included in a network has also been devised. Furthermore, a distribution system in which each node associates information about a physical position of a node with an identifier of an application that operates on the node and stores them therein has been proposed. This distribution system permits, when an application that operates on a first node communicates with an application that operates on a second node, extracting of pieces of information on the positions of the nodes on the basis of the identification information on an application, so as to determine communication means from the pieces of information on the positions.

For example, documents such as Japanese Laid-open Patent Publication No. 2002-158665, Japanese Laid-open Patent Publication No. 2005-45535, and International Publication No. 2011/045919 are known.

Additional prior art is known from the following documents.

US 2015/0055657 A1 discloses application based packet forwarding. Here, a routing engine is supplemented by an application based routing engine, and routing decisions may be taken based on a flow table and a policy based routing table. The flow table is updated regularly.

US 2003/206523 A1 deals with communication between different networks using a gateway. In particular, it addresses situations wherein different network protocols may be used in both networks. The gateway maintains a look-up table associating applications with network addresses and ports.

US 2006/0227758 A1 deals with virtual routing domains (VRDs) in IP networks. The routing process makes use of application layer information for determining the destination VRD.

When data obtained in a certain private network is used in another private network, data passing between devices included in different private networks will be performed. In this case, communication using Network Address Port Translation is often performed, but in some cases, it may be difficult to perform communication even if Network Address Port Translation is used. For example, when a private IP address assigned to a source device is consistent with a private IP address assigned to a destination device, a transmitted packet, without becoming subject to Network Address Port Translation, reverts back to the source device. On the other hand, it is also difficult to perform communication between devices included in different private networks even if a relay device on a route is set up individually without using Network Address Port Translation.

### SUMMARY

In one aspect, an object of the present invention is to easily perform transmission and reception of data between devices included in different private networks.

This object of the invention is solved by the subject matter of the independent claims. Advantageous embodiments of the invention are disclosed by the dependent claims.

According to an example, a communication device includes a receiver, a communication processing unit, a data processing unit, a routing table, and a transmitter. The receiver receives a packet from one of a plurality of networks. The communication processing unit identifies a first application to be used to process the data included in the received packet based on a physical interface used for receiving the packet and a logical port number and outputs the received packet to a data processing unit that realizes processing with the first application. The data processing unit identifies a location of a first device that has transmitted the packet received from the first private network by processing data included in the received packet, identifies a second device to which data obtained by use of the received packet is to be relayed, on the basis of the location of the first device, and identifies a certain application used for processing the packets received or transmitted in a network including the second device. The routing table associates, for each of the plurality of networks, a transfer route that is used in the network with identification information of an application used for processing the packets received or transmitted in each of the plurality of networks, the first private network and the second private network having an identical network address. The transmitter generates a transmitting packet including the data obtained by use of the received packet and transmits the transmitting packet using a transfer route for the second private network when identification information of the certain application is associated with the transfer route for the second private network by the routing table

### BRIEF DESCRIPTION OF DRAWINGS

FIG. 1 is a diagram that illustrates an example of a communication method according to embodiments;
FIG. 2 is a diagram that illustrates an example of a configuration of a communication device;
FIG. 3 is a diagram that illustrates an example of a hardware configuration of the communication device;
FIGs. 4A and 4B are a diagram that illustrates an example of connections of the communication device to networks;
FIG. 5 illustrates an example of management information;
FIG. 6 is a flowchart that illustrates an example of processing of receiving a packet in the communication device;
FIG. 7 illustrates examples of information elements included in data to be input and output;
FIG. 8 illustrates examples of routing tables; and

It is assumed that the communication device 10 has received a packet P1 from the communication device 5a through the interface IF1. A source address of the packet P1 is the private IP address (PA) of the communication device 5a. The communication device 10 processes the packet P1 using the application A1 that processes a packet transmitted and received in the network N1. In this case, the processing performed on the packet P1 may be a termination of the packet, or may be the termination of the packet and processing performed on data stored in a payload of the packet.

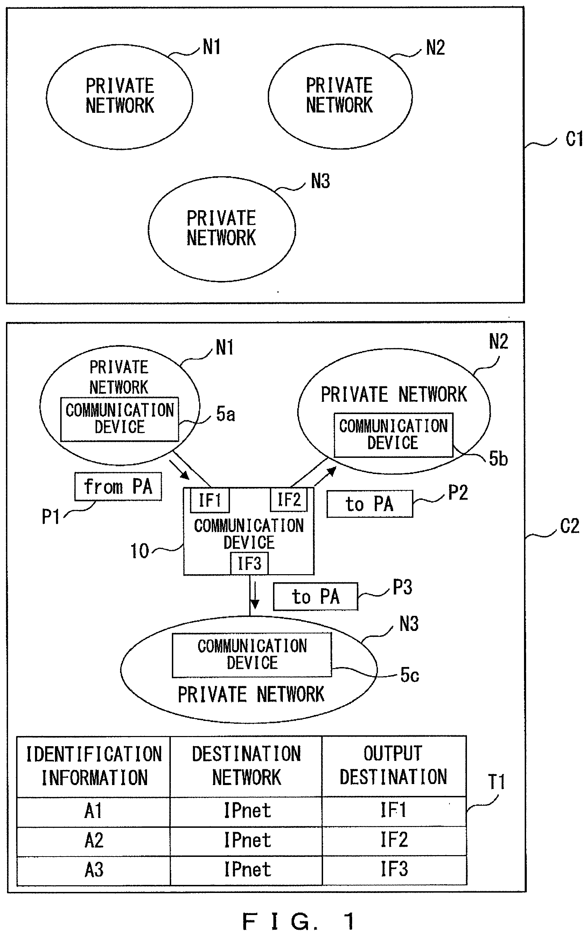

The communication device 10 identifies an application used in a network to which data obtained by performing the processing on the packet P1 is to be relayed. When the data obtained by performing the processing on the packet P1 is relayed to the communication devices 5b and 5c, the networks N2 and N3 are relay destination networks. The communication device 10 generates a packet to be transmitted (transmitting packet) including data to be relayed in a form corresponding to each relay destination network. In the example of FIG. 1, a packet P2 is generated to be destined for the network N2, and a packet P3 is generated to be destined for the network N3. Further, as a private IP address, PA is assigned to both of the communication device 5b that is a destination of the packet P2 and the communication device 5c that is a destination of the packet P3, so PA is a destination address for both of the packets P2 and P3.

As represented in a table T1, the communication device 10 stores therein a communication route and an interface in association with identification information on an application, wherein the communication route and the interface are used for performing processing of transferring to each network to which the communication device 10 is connected and the application is used for processing a packet transmitted and received in each of the networks. In this case, all the network addresses of the networks N1 to N3 have the same value, so it is not possible to know which entry includes information that can be used for the transfer processing if only routing information is provided.

The packet P2 is a packet destined for the network N2 that is to be processed by the application A2, so the communication device 10 transmits the packet P2 from the interface IF2 using the routing information associated with the identification information on the application A2. On the other hand, the packet P3 is a packet destined for the network N3 that is to be processed by the application A3, so the communication device 10 transmits the packet P3 from the interface IF3 using the routing information associated with the identification information on the application A3. Thus, although the destination addresses of both of the packets P2 and P3 are PA and the network addresses of both of the networks N2 and N3 are IPnet, the communication device 10 can transmit the packet P2 to the communication device 5b and the packet P3 to the communication device 5c.

As described above, when a plurality of private networks having the same private address are connected to the communication device 10, the communication device 10 determines a route from a combination of information on an application that processes a packet and routing information. Accordingly, if the private networks are connected to one another through the communication device 10, a data relay between devices included in the private networks can be easily performed, though it has been difficult to perform such a data relay even using NAPT.

Further, the communication device 10 also determines whether to process a packet received from a communication device 5 in a private network and to relay data to another network. Thus, a communication device 5 in each private network does not have to determine whether to report data to a device in another private network, which results in reducing a processing load of a device in the communication device 5.

### <Device Configuration>

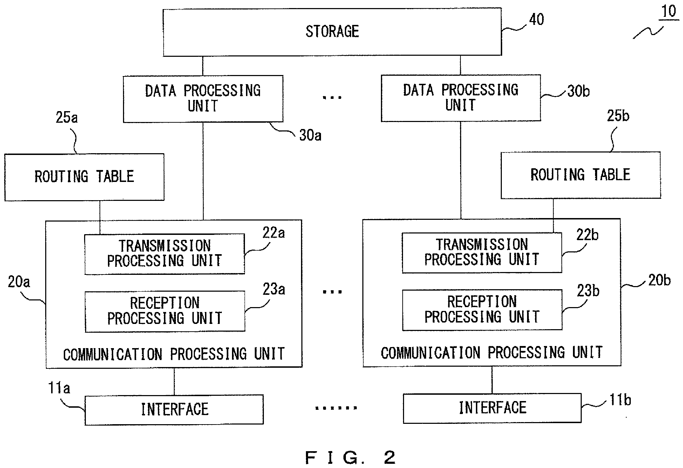

FIG. 2 is a diagram that illustrates an example of a configuration of the communication device 10. The communication device 10 includes interfaces 11 (11a, 11b), communication processing units 20 (20a, 20b), routing tables 25 (25a, 25b), data processing units 30 (30a, 30b), and a storage 40. FIG. 2 is just an example, and there may be any number of interfaces 11, communication processing units 20, routing tables 25, and data processing units 30 being included in the communication device 10. For example, as described in FIG. 1, one communication processing unit 20, one routing table 25, and one data processing unit 30 may be included in the communication device 10.

For visual clarity, FIG. 2 onwards illustrate an example in which the number of interfaces 11, the number of communication processing units 20, the number of routing tables 25, and the number of data processing units 30 are the same and are equal to or more than two. Further, reference numerals are given to components in such a manner that the same letter is added after a number for each application with which the components are associated. For example, a packet that is to be processed by the application A1 is processed by use of the interface 11a, the communication processing unit 20a, the routing table 25a, and the data processing unit 30a. On the other hand, a packet that is to be processed by the application A2 is processed by use of the interface 11b, the communication processing unit 20b, the routing table 25b, and the data processing unit 30b.

The interface 11 performs transmission and reception of a packet between the communication device 10 and a device to which the communication device 10 is connected. The communication processing unit 20 includes a transmission processing unit 22 and a reception processing unit 23. The transmission processing unit 22 generates a transmitting packet that includes data input from the data processing unit 30. Further, the transmission processing unit 22 performs processing of transmitting a packet through the interface 11 by referring to the routing table 25. As illustrated in FIG. 2, when the communication processing unit 20 and other components are provided for each application, the routing table 25 includes information associated with an application that processes the packet transmitted by the transmission processing unit 22. For example, the routing table 25a includes routing information related to a network to which the interface 11a is connected, and the routing table 25b includes routing information related to a network to which the interface 11b is connected.

The data processing unit 30 terminates a packet and accordingly processes data included in the packet. For example, the data processing unit 30, which is realized by use of a program of a certain application processes, using the application, the data obtained from the packet. Further, according to the setting of, for example, the program of the application, the data processing unit 30 provides the data to another program or invokes another program. For example, an API (application programming interface) used for invoking another program is also accordingly realized by the data processing unit 30. When it provides the data to another program, the data processing unit 30 stores, in the storage 40, the data along with the identification information on the application to which the data is to be provided. Further, the data processing unit 30 obtains, from the storage 40, the data in association with the identification information on the application that realizes the data processing unit 30, and outputs the data to the transmission processing unit 22 as data on which transmission processing is to be performed.

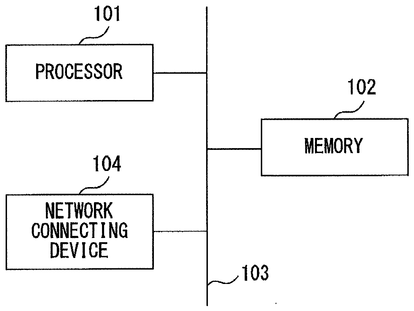

FIG. 3 is a diagram that illustrates an example of a hardware configuration of the communication device 10. The communication device 10 includes a processor 101, a memory 102, a bus 103, and a network connecting device 104. For purposes of clarity, one processor 101, one memory 102, and one network connecting device 104 are illustrated in the example of FIG. 3, but there may be any number of processors 101, memories 102, and network connecting devices 104. For example, when a different network connecting device 104 is used for each private network to which the communication device 10 is connected, the communication device 10 includes the same number of network connecting devices 104 as that of the private networks to which the communication device 10 can be connected.

The processor 101 is any processing circuit that includes a CPU (central processing unit). The processor 101 uses the memory 102 as a working memory and executes a program, so as to perform various processes. The memory 102 includes a RAM (random access memory), and further includes a nonvolatile memory such as a ROM (read only memory) . The ROM stores therein a program. The memory 102 may accordingly include an external storage such as a hard disk. The bus 103 connects the processor 101, the memory 102, and the network connecting device 104 so that they can perform input and output of data between one another. In the communication device 10, the processor 101 operates as the data processing unit 30. The memory 102 operates as the storage 40. Further, the memory 102 holds, for example, the routing table 25 and the data used for processing processor 101, and a program that is loaded into the processor 101. The network connecting device 104 operates as the interface 11. The communication processing unit 20 may be realized by the processor 101 and the network connecting device 104. The program may be provided stored in a computer-readable recording medium in a non-transitory manner so as to be installed in the communication device 10.

### <Embodiments>

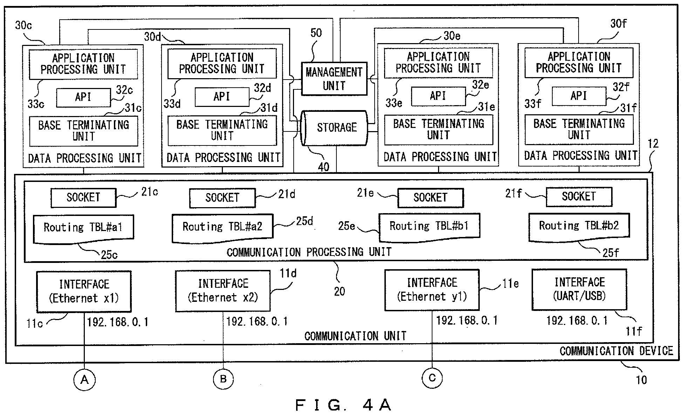

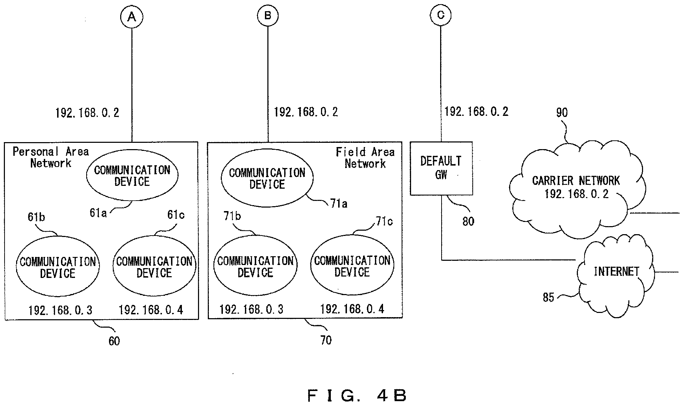

FIGs. 4A and 4B are diagrams that illustrate an example of connections of the communication device 10 to networks. It is assumed that the communication device 10 of FIG. 4A is connected to a PAN (personal area network) 60, a FAN (field area network) 70, a gateway 80, and a carrier network 90. The communication device 10 is connected to the Internet 85 through the gateway 80. The gateway 80 operates as a default gateway when the communication device 10 communicates with the Internet 85. It is assumed that, in the carrier network 90 connected to the communication device 10, a private IP address is assigned to each user from a carrier side and a terminal of each of the users performs communication using the assigned private IP address.

FIGs. 4A and 4B illustrate an example in which the transmission processing unit 22 and the reception processing unit 23 are realized by a socket 21 that is used for a communication of each application. A communication unit 12 has interfaces 11 (11c to 11f) and the communication processing unit 20. In the example of FIGs. 4A and B, each of the data processing units 30 has a base terminating unit 31, an API 32, and an application processing unit 33. The base terminating unit 31 terminates an input packet and outputs obtained data to the application processing unit 33. The application processing unit 33 processes the data accordingly and outputs, to the API 32, data to be processed by another application. The API 32 associates the input data with identification information on an application to which the data is to be provided, and outputs it to the storage 40.

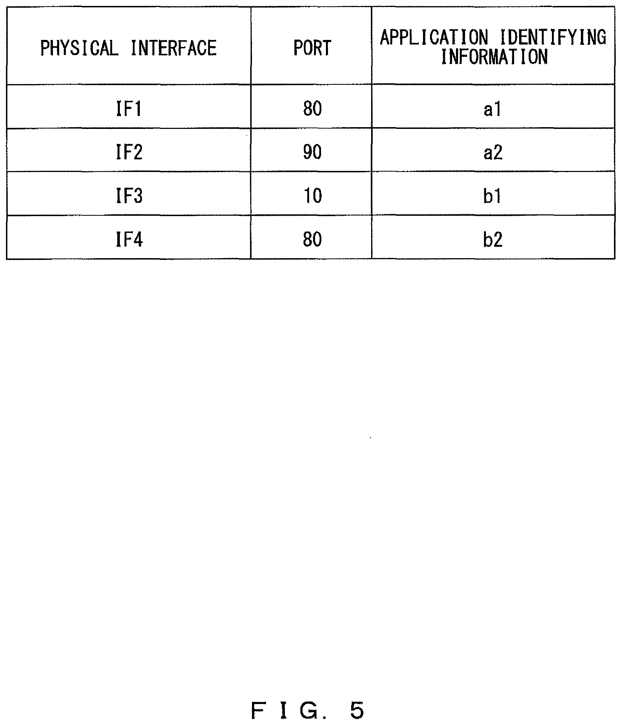

In this case, the identification information on an application is a value that is uniquely identified for each combination of a private network in which data is transmitted and received and an application that processes the data. For example, it is assumed that the same type of program is used for processing data transmitted and received in the PAN 60 and data transmitted and received in the FAN 70. Even in this case, application identifying information that is assigned to an application that processes the data transmitted and received in the PAN 60 and application identifying information that is assigned to an application that processes the data transmitted and received in the FAN 70 are different from each other. A management unit 50 manages a relationship between a network to which the communication device 10 is connected and an application used for processing data. The management unit 50 accordingly generates management information (FIG. 5) used by sockets 21c to 21f.

In the example of FIG. 4A, a data processing unit 30c and the socket 21c perform processing related to an application used for processing data obtained from the PAN 60 (application a1). A base terminating unit 31c terminates a packet received from the PAN 60 through the interface 11c. An API 32c performs processing when the application a1 provides the data to another application. An application processing unit 33c realizes processing performed in the application a1. The socket 21c accordingly performs processing of transmitting a packet using a routing table 25c.

Likewise, a data processing unit 30d, a socket 21d, a routing table 25d, and the interface 11d are used for processing a packet transmitted to and received from the FAN 70, and for processing data obtained from the FAN 70. It is assumed that an application a2 is used for processing the data obtained from the FAN 70. A data processing unit 30e, a socket 21e, a routing table 25e, and the interface 11e are used for processing a packet transmitted and received through the gateway 80, and for processing data included in a received packet. It is assumed that an application b1 is used for processing the data included in the packet received through the gateway 80. A data processing unit 30f, a socket 21f, a routing table 25f, and the interface 11f are used for processing a packet transmitted and received through the carrier network 90, and for processing data obtained through the carrier network 90. It is assumed that an application b2 is used for processing data included in a packet received through the carrier network 90.

In order to facilitate the explanation of the operation of the communication device 10 when it is connected to four networks, FIGs. 4A and 4B illustrate a case in which the interfaces 11c to 11f are provided in the communication device 10, but the number of interfaces 11 in the communication device 10 may be discretionally changed.

A process in which data is relayed between private networks through the communication device 10 will now be described, divided into a process in which data is received from a private network and a process in which processing of transmitting a packet from the communication device 10 is performed. In the following example, it is assumed that the PAN 60 is a network of a location identifying service using BLE (Bluetooth low energy) and the FAN 70 is an ad-hoc network that controls a lighting-up of a streetlight using specified low power radio. The PAN 60 includes communication devices 61a to 61c and the FAN 70 includes communication devices 71a to 71c. It is assumed that a streetlight to be processed by the FAN 70 is lit up according to the location of a user that is identified by the location identifying service. It is also assumed that the communication device 10 reports the location of a user A whose location is identified by the location identifying service to a user B who uses a smartphone to which a private IP address is assigned in the carrier network 90.

In the example of FIGs. 4A and 4B, it is assumed that all of the network addresses of the PAN 60, the FAN 70, and the carrier network 90 are set to 192.168.0.0. Further, it is assumed that 192.168.0.0 is also the address of a network that includes a connection between the communication device 10 and the gateway 80. In other words, in the example of FIGs. 4A and 4B, 192.168.0.0 is an address of all the networks that respectively include the interfaces 11c to 11f included in the communication device 10, but the interfaces 11c to 11f belong to networks that are different from one another. Furthermore, it is assumed that 192.168.0.2 is assigned to both the communication device 61a and the communication device 71a as a private IP address. It is assumed that, likewise, 192.168.0.3 is assigned to the communication device 61b and the communication device 71b, and 192.168.0.4 is assigned to the communication device 61c and the communication device 71c.

It is assumed that, in the PAN 60, the communication device 61a operates as a gateway, and in the FAN 70, the communication device 71a operates as a gateway. Each of the communication device 61a and the communication device 71a is connected to the communication device 10 via Ethernet. Further, in the example of FIGs. 4A and 4B, the gateway 80 is also connected to the communication device 10 via Ethernet. The interface 11f is, for example, a 3G module that is connected through a UART (universal asynchronous receiver transmitter) or a USB (universal serial bus), and is used for a radio communication with a device included in the carrier network 90.

### (1) Reception of Data from Private Network

It is assumed that the user A moves while carrying a terminal device and then the terminal device of the user A enters a communication area of the communication device 61b. Then, the terminal device of the user A transmits a report signal to the communication device 61b. When receiving the report signal, the communication device 61b generates a report packet for reporting that the user A exists around the communication device 61b, and transmits the report packet to the communication device 61a. With respect to a format of a report packet and a communication procedure in the PAN 60, any existing communication performed in a PAN may be applied. The communication device 61a transmits, to the communication device 10, a report packet for reporting that the user A is located in the communication area of the communication device 61b. In this case, a communication between the communication device 61a and the interface 11c of the communication device 10 is a communication performed in a private network.

The interface 11c outputs the received packet to the socket 21c. The socket 21c identifies a data processing unit 30 that processes the input packet by use of management information generated in the management unit 50.

FIG. 5 illustrates an example of management information. The management information associates an identification number of a physical interface, a port number, and application identifying information with one another. In this case, the physical interface is an interface 11, and the port number in the management information is a logical port number of a received packet. It is assumed that identification information IF1 is assigned to the interface 11c, IF2 to the interface 11d, IF3 to the interface 11e, and IF4 to the interface 11f.

Each socket 21 identifies an application that processes data included in a received packet by use of a combination of the interface 11 that was used for the reception of a packet and the logical port number. For example, it is assumed that a destination port number of a packet which the communication device 10 has received from the communication device 61a through the interface 11c is 80. In this case, the identification information on a physical interface used for the reception of a packet is IF1, and the destination port number is 80, so the socket 21c determines that data included in the received packet is to be processed by the application a1. A packet to be processed by the application a1 is processed in the data processing unit 30c. Then, the socket 21c outputs the received packet to the base terminating unit 31c. The base terminating unit 31c terminates the input packet, and outputs information on a payload to the application processing unit 33c. The application processing unit 33c processes the input data.

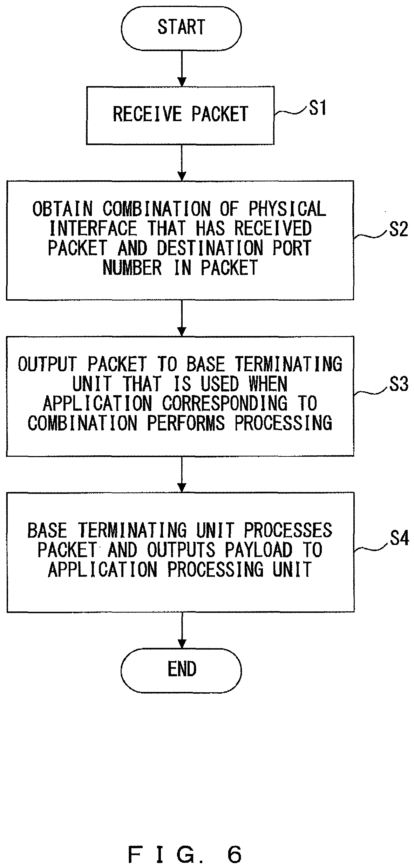

FIG. 6 is a flowchart that illustrates an example of processing of receiving a packet in the communication device 10. The communication device 10 receives a packet through the interface 11 (Step S1). The socket 21 obtains a combination of a physical interface that has received a packet and a destination port number in the packet (Step S2) . The socket 21 identifies an application corresponding to the combination, and outputs the packet to a base terminating unit 31 that is used when the identified application performs processing (Step S3) . The base terminating unit 31 processes the packet and outputs a payload to the application processing unit 33 (Step S4).

### (2) Processing of Transmitting Packet from Communication Device 10

In the example of the processing of receiving a packet that has been described with reference to FIGs. 4A and 4B, the application processing unit 33c processes the data included in the report packet received from the communication device 61a, so as to determine that the user A is located around the communication device 61b. The application processing unit 33c has stored information that indicates a location of a streetlight controlled by the FAN 70, and identifies a location of a streetlight to be lit up, according to the location information on a user that has been reported by a device in the PAN 60. The application processing unit 33c also holds, for each streetlight, information on a communication device 71 that can be used to control the streetlight. Using these pieces of information, the application processing unit 33c identifies a communication device 71 to which control information for lighting up a streetlight located in a predetermined range in the vicinity of the location of the user A is to be transmitted. In the example of FIGs. 4A and 4B, it is assumed that, in order to light up the streetlight in the vicinity of the user A, the application processing unit 33c selects the communication device 71b as a communication destination. Then, the application processing unit 33c generates data to be transmitted to the communication device 71b.

It is assumed that the application processing unit 33c further holds a table in which information on a user whose location information may be reported by the PAN 60 is associated with information on another device to which the location information is to be reported, and information used for reporting the location information. In the example of FIGs. 4A and 4B, it is assumed that, when the location information on the user A is reported by the PAN 60, it is determined that the location information on the user A is to be reported to a smartphone 91 (not shown) that is used by the user B in the carrier network 90. The application processing unit 33c generates data to be transmitted to the smartphone 91.

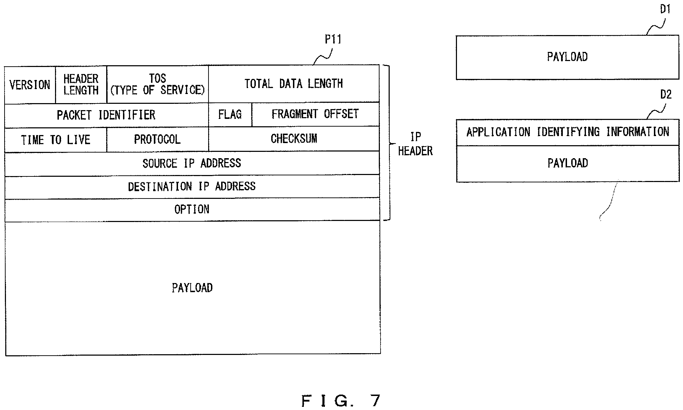

FIG. 7 illustrates examples of information elements included in data to be input and output. D1 of FIG. 7 is a payload included in a transmitting packet that is transmitted from the communication device 10, and is data that is to be relayed by the application processing unit 33 to another device. In the example described with reference to FIGs. 4A and 4B, the application processing unit 33c generates pieces of data of packets to be transmitted to the communication device 71b and the smartphone 91, as payloads destined for these respective devices.

When pieces of data to be relayed are obtained, the application processing unit 33c determines which application processes each of the pieces of data. The application processing unit 33c holds, in advance, information for identifying an application processing unit 33 to which data is to be relayed, according to the communication destination device. For example, each application processing unit 33 recognizes that processing is performed by the data processing unit 30c when data is to be relayed to a device in the PAN 60 and is performed by the data processing unit 30d when data is to be relayed to the FAN 70. Likewise, each application processing unit 33 also recognizes that processing is performed by the data processing unit 30e when data is to be relayed to a device on the Internet 85 and is performed by the data processing unit 30f when data is to be relayed to the carrier network 90. Using these pieces of information, the application processing unit 33c determines to output a payload destined for the communication device 71b to an application processing unit 33d. Likewise, the application processing unit 33c determines to output a payload destined for the smartphone 91 to an application processing unit 33f.

Each application processing unit 33 has stored identification information on an application that is executed in an application processing unit 33 that operates in the communication device 10, and associates a payload with identification information on an application of a relay destination and outputs it to the API 32. The application processing unit 33 further associates the combination of the payload and the identification information on an application of a relay destination with, for example, a destination address, and outputs it to the API 32.

D2 of FIG. 7 illustrates an example of data which the application processing unit 33 outputs to the API 32. For example, the application processing unit 33c determines to output a payload destined for the smartphone 91 to the application processing unit 33f. Here, it is assumed that the identification information on an application executed in the application processing unit 33f is b2. Then, the application processing unit 33c associates a payload of a packet destined for the smartphone 91 with the information "application identifying information=b2", and outputs it to the API 32c. Likewise, information destined for the communication device 71b is processed. For example, it is assumed that the identification information on an application executed in the application processing unit 33b is a2. In this case, the application processing unit 33c outputs a combination of a payload of a packet destined for the communication device 71b with the information "application identifying information=a2" to the API 32c. When the combination of a payload and application identifying information is input, the API 32c outputs the input information to the storage 40. Each of the data destined for the communication device 61b and the data destined for the smartphone 91 is also associated with information on a destination address of the data.

The base terminating units 31c to 31f each confirm regularly whether data associated with identification information on an application by which the data is to be processed is stored in the storage 40. When the data associated with the identification information on an application by which the data is to be processed is stored in the storage 40, each of the base terminating units 31 obtains the data so as to generate a transmitting packet. For example, as a result of the processing performed by the API 32c, each of data destined for the communication device 71b and data destined for the smartphone 91 is stored in the storage 40 along with an identifier of an application used for processing the data. Then, the base terminating unit 31d obtains data associated with application identifying information=a2, and information on, for example, a destination address. The base terminating unit 31d generates a transmitting packet destined for the communication device 71b by use of the obtained data and the obtained information on a destination address.

P11 of FIG. 7 illustrates an example of the transmitting packet generated by the base terminating unit 31d. The base terminating unit 31d removes application identifying information from information obtained from the storage 40, and adds a header used for transmission processing to data to be transmitted (payload). In the example of P11, an IP header is added to the payload. The IP header includes version information, a header length, a type of service, a total data length, a packet identifier, a flag, a fragment offset, a time to live, a protocol, a checksum, a source IP address, a destination IP address, and an option. The source address of a packet destined for the communication device 71b is an address assigned to the interface 11d that is used for communicating with the FAN 70. Thus, information on an address of the packet destined for the communication device 71b is as follows.
Source IP address: 192.168.0.1 (interface 11d)
Destination IP address: 192.168.0.3 (communication device 71b)

Likewise, the base terminating unit 31f accesses the storage 40 so as to obtain data associated with application identifying information=b2, and information on, for example, a destination address. The base terminating unit 31d generates a transmitting packet destined for the smartphone 91 by use of the obtained data and the obtained information on a destination address. It is assumed that the address assigned to the smartphone 91 is 192.168.0.3. Then, information on an address of the packet destined for the smartphone 91 is as follows.
Source IP address: 192.168.0.1 (interface 11f)
Destination IP address: 192.168.0.3 (smartphone 91)

The processing that is performed when the application processing unit 33 provides data to another application has been described above, but there is a possibility that data generated by the application processing unit 33 will not be output to another application. For example, when data to be relayed is relayed to the same destination network as that of a transmitting packet, the application processing unit 33 determines to process the data to be relayed without providing it to another application. In this case, the application processing unit 33 outputs the data to be relayed to the base terminating unit 31. Thus, as illustrated in D1 of FIG. 7, the base terminating unit 31 obtains information that corresponds to a payload. The base terminating unit 31 that has obtained the data from the application processing unit 33 generates a transmitting packet that has the same format as P11 of FIG. 7.

After it generates a transmitting packet, a base terminating unit 31 outputs the generated transmitting packet to a socket 21 that performs processing related to the same application as the application for which the base terminating unit 31 is used. For example, the base terminating unit 31d outputs, to the socket 21d, the transmitting packet generated for the communication device 71b. The socket 21d refers to the routing table 25d.

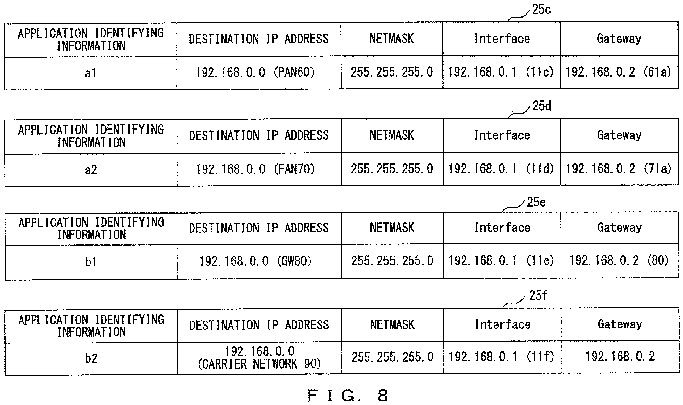

FIG. 8 illustrates examples of routing tables 25. In a system in which different routing tables 25 are generated for each application as illustrated in FIGs. 4A and 4B, the routing tables 25c to 25f of FIG. 8 are generated. The routing table 25c is a table used for routing to the PAN 60, and the routing table 25d is a table used for routing to the FAN 70. Likewise, the routing table 25e is used for performing processing of transmitting a packet transmitted to the Internet 85 through the gateway 80, and the routing table 25f is used for performing processing of transmission to the carrier network 90. Each of the routing tables includes information that identifies a network address of a transfer destination network and information on the transfer destination. As illustrated in FIGs. 4A and 4B, when four networks having the same network address are connected to the communication device 10, the communication device 10 records pieces of transfer information in which the same network address is used, as the routing tables 25c to 25f indicate. However, as illustrated in FIG. 8, the transfer information on each network is associated with identification information on an application that processes a packet transmitted and received in the network. Thus, the socket 21 can distinguish a plurality of networks that use the same private address by the application identifying information.

In order to facilitate understanding, in FIG. 8, a destination private network that is identified by use of the application identifying information is indicated parenthetically in DESTINATION IP ADDRESS. Also, in INTERFACE and GATEWAY, a reference numeral assigned to a device that is identified by use of the application identifying information is indicated parenthetically. A specific example of how to understand each of the routing tables 25 by use of the application identifier is described below.

For example, the routing table 25d includes routing information associated with an application (application identifying information=a2) that is used for processing a packet transmitted and received in the FAN 70. The routing table 25d indicates information on a route to a network whose network address is 192.168.0.0 by use of a destination IP address and a netmask. The network in which a packet is processed by the application identified by application identifying information=a2 and whose network address is 192.168.0.0 is the FAN 70. Thus, the routing table 25d indicates a transfer route to the FAN 70. In the routing table 25d, when the transmission to the network whose network address=192.168.0.0 is performed, the address of an interface is 192.168.0.1 and the address of a gateway is 192.168.0.2. In this case, the information included in the routing table 25d is associated with application identifying information=a2, so this is the information when communication with the FAN 70 is performed. Therefore, the interface included in the routing table 25d (192.168.0.1) refers to the interface 11d, and the gateway included in the routing table 25d (192.168.0.2) refers to the communication device 71a.

Likewise, the routing table 25f is associated with an application that processes the information on the carrier network 90 (application identifying information=b2), so the destination IP address 192.168.0.0 refers to the carrier network 90. Further, in the routing table 25f, the interface (192.168.0.1) refers to the interface 11f, and the gateway (192.168.0.2) refers to a gateway device (not shown) in the carrier network 90.

The routing table 25e is associated with an application that processes information destined for the Internet 85 (application identifying information=b1), so the destination IP address 192.168.0.0 refers to a network including the gateway 80. Further, in the routing table 25e, the interface (192.168.0.1) refers to the interface 11e, and the gateway (192.168.0.2) refers to the gateway 80.

The routing table 25c is associated with an application that processes information destined for the PAN 60 (application identifying information=a1), so the destination IP address 192.168.0.0 refers to the PAN 60. Further, in the routing table 25c, the interface (192.168.0.1) refers to the interface 11c, and the gateway (192.168.0.2) refers to the communication device 61a.

The socket 21d that processes a transmitting packet destined for the communication device 71b refers to the routing table 25d because it recognizes in advance that a packet processed by the socket 21d will be processed by an application identified by application identifying information=a2. The socket 21d may have stored the information that an output destination of a transmitting packet from the socket 21d is the interface 11d. The socket 21d refers to the routing table 25d so as to output the transmitting packet to the interface 11d. Thus, information on a transfer destination and an address of the transmitting packet is as follows.
Source IP address: 192.168.0.1 (interface 11d)
Destination IP address: 192.168.0.3 (communication device 71b)
Transfer destination: 192.168.0.2 (communication device 71a)

The communication device 71a that has received a packet from the communication device 10 transfers the packet to the communication device 71b. In this case, the packet destined for the communication device 71b is a control packet that makes a request to light up a streetlight controlled by the communication device 71b. Thus, the communication device 71b processes the received packet so as to light up the streetlight controlled by the communication device 71b. Accordingly, a streetlight around the location of the user A is lit up.

Next, processing of transferring a packet destined for the smartphone 91 is described. The socket 21f that processes a transmitting packet destined for the smartphone 91 refers to the routing table 25f because it recognizes in advance that the packet processed by the socket 21f will be processed by an application identified by application identifying information=b2. The socket 21f refers to the routing table 25f so as to output the transmitting packet to the interface 11f. Thus, information on a transfer destination and an address of the transmitting packet is as follows.
Source IP address: 192.168.0.1 (interface 11f)
Destination IP address: 192.168.0.3 (smartphone 91)
Transfer destination: 192.168.0.2 (gateway in the carrier network 90)

The gateway in the carrier network 90 that has received the packet from the communication device 10 transfers the packet to the smartphone 91. In this case, the packet destined for the smartphone 91 is information that reports information on the location of the user A. The smartphone 91 performs processing of, for example, accordingly displaying, on a screen, information in the received packet, so as to report the location of the user A to the user B using the smartphone 91.

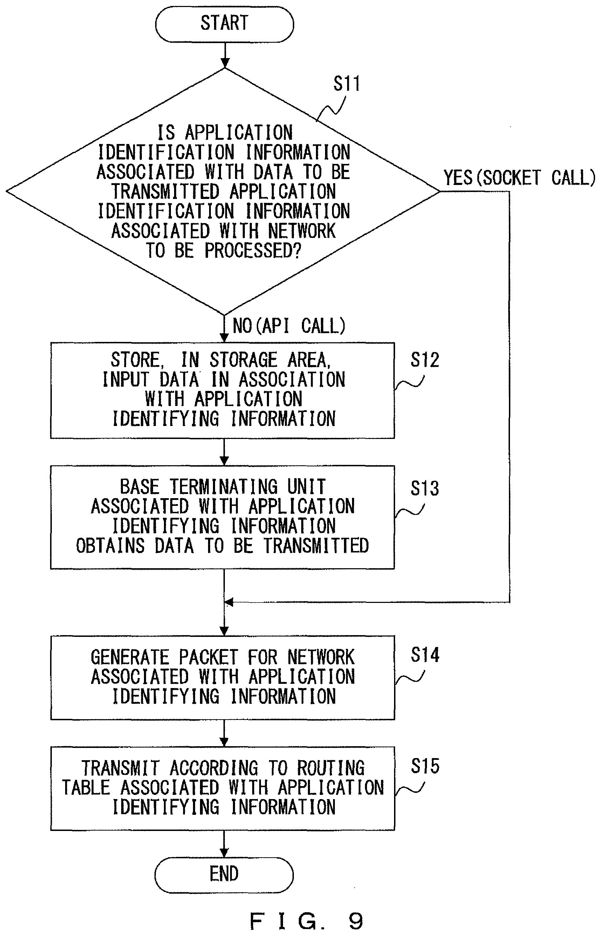

The processing that is performed when the application processing unit 33 provides data to the API 32 has been described above, but in some implementations, the base terminating unit 31 may output the data to the API 32. In this case, the transmitted data is output to the base terminating unit 31 in combination with application identifying information even when the data is destined for any of the networks. FIG. 9 illustrates an example of processing that is performed when transmitted data is distributed by the base terminating unit 31.

FIG. 9 is a flowchart that illustrates an example of processing of transmitting a packet in the communication device 10. The base terminating unit 31 determines whether identifying information associated with data to be transmitted is application identifying information associated with a network to be processed (Step S11). When the identification information associated with the data is not the application identifying information associated with the network on which the base terminating unit 31 itself performs processing, the base terminating unit 31 outputs the data and the identification information associated with the data to the API 32 (No in Step S11). The API 32 stores, in an area (storage 40) that stores therein pieces of data to be transferred to a plurality of networks, the input data in association with application identifying information (Step S12) . A base terminating unit 31 associated with the application identifying information obtains the data to be transmitted from the storage 40 (Step S13). The base terminating unit 31 generates a packet for a network associated with the application identifying information and outputs it to the socket 21 (Step S14). The socket 21 performs transmission processing according to the routing table 25 associated with the application identifying information (Step S15).

On the other hand, when the identification information associated with the data is the application identifying information associated with the network on which the base terminating unit 31 itself performs processing, the processes of and after Step S14 are performed (Yes in Step S11).

As described above, when a plurality of private networks having the same private network are connected to the communication device 10, the communication device 10 determines a route from a combination of information on an application that processes a packet in each of the networks and routing information. Thus, if the communication device 10 is used, a data relay between devices of the private networks can be easily performed, even though it has been difficult to perform such a data relay even by NAPT.

Further, in the communication device 10, a content of the processing performed in the application processing unit 33 may be discretionally changed according to the program that will be loaded into the communication device 10. In the example described above, the application processing unit 33c performs processing by use of received data so as to generate data that is different from data included in a payload of a received packet, but it is acceptable if data processing is not performed in the application processing unit 33. In this case, the application processing unit 33 deals with the received data as transmitted data destined for an application used for processing performed in another network, so as to provide the data to another application. As a result, processing of transferring data is performed between private networks.

A vendor of the communication device 10 can perform designing so that an operator who offers a service of a network that uses the communication device 10 can freely design processing performed in the application processing unit 33. In this case, the operator loads, into the communication device 10, a program according to the service he/she intends to offer to a user, so as to realize, by means of the processor 101 in the communication device 10, an application processing unit 33 that offers a desired service.

As described above, in the communication method according to the embodiments, transmission and reception of data can be easily performed between different networks.

### <Others>

The embodiments are not limited to the embodiments described above, and various modifications may be made thereto. Some other examples will be described below.

In the example illustrated in FIG. 5, one application is registered for each physical interface, but a plurality of applications may be associated with each physical interface. In this case, in a routing table 25 for each network illustrated in FIG. 8, pieces of identification information on all applications that are likely to process a packet transmitted and received in the network are associated. For example, it is assumed that a packet transmitted and received in the PAN 60 is processed by the application with application identifying information=a5 in addition to the application with application identifying information=a1. In this case, a1 and a5 are associated in APPLICATION IDENTIFYING INFORMATION of the routing table 25c.

The networks illustrated in FIGs. 4A and 4B are just examples, and some of the networks connected to the communication device 10 may have different network addresses. Further, information elements included in a table such as the management information of FIG. 5 or the routing tables 25 of FIG. 8 may be changed depending on implementation.

The example in which a plurality of routing tables 25 each corresponding to a different application identifier are used has been described with reference to FIGS. 2, 4A and 4B, but the number of routing tables 25 held by the communication device 10 may be one. When the communication device 10 holds one routing table 25, the transmission processing unit 22 searches in the routing table 25 for information associated with identification information on an application that processes a packet to be transmitted.

The case in which the communication device 10 performs processing of relaying data between private networks has been described above, but the communication device 10 may transmit data generated in the communication device 10 to a device included in a private network.

## Claims

1. A communication device (10) comprising:
a receiver (23) that receives a packet from one of a plurality of networks, the plurality of networks including a first private network (60) and a second private network (70);
a communication processing unit (20) that identifies a first application to be used to process the data included in the received packet based on a physical interface used for receiving the packet and a logical port number and that outputs the received packet to a data processing unit that realizes processing with the first application;
the data processing unit (30) that identifies a location of a first device that has transmitted the packet received from the first private network by processing data included in the received packet, that identifies a second device to which data obtained by use of the received packet is to be relayed, on the basis of the location of the first device, and that identifies a certain application used for processing the packets received or transmitted in a network including the second device;
a routing table (25) that associates, for each of the plurality of networks, a transfer route that is used in the network with identification information of an application used for processing the packets received or transmitted in each of the plurality of networks, the first private network and the second private network having an identical network address; and
a transmitter (22) that generates a transmitting packet including the data obtained by use of the received packet and transmits the transmitting packet using a transfer route for the second private network when identification information of the certain application is associated with the transfer route for the second private network by the routing table.

2. The communication device according to claim 1, comprising a first interface and a second interface, the first interface being connected to the first private network, and the second interface being connected to the second private network, wherein
the first interface is associated with a first identification information that identifies a first application used in the first private network,
the second interface is associated with a second identification information that identifies a second application used in the second private network, and
the transmitter (22) refers to the routing table so as to transmit the transmitting packet through the first interface when the certain application is the first application and to transmit the transmitting packet through the second interface when the certain application is the second application.

3. A communication method comprising:
receiving (S1), by a communication device (10) connected to a plurality of networks, a packet from one of the plurality of networks, the plurality of networks including a first private network (60) and a second private network (70), the first private network and the second private network having an identical network address;
identifying, by a communication processing unit (20) in the communication device, a first application to be used to process the data included in the received packet based on a physical interface used for receiving the packet and a logical port number,
outputting, by the communication processing unit in the communication device, the received packet to a data processing unit that realizes processing with the first application;
identifying, by a data processing unit (30) in the communication device, a location of a first device that has transmitted the packet received from the first private network by processing (S4) data included in the received packet;
identifying, by the data processing unit (30), a second device to which data obtained by use of the received packet is to be relayed, on the basis of the location of the first device;
identifying (S11), by the data processing unit (30), a certain application used in a network including the second device;
generating (S14), by the communication device, a transmitting packet including the data obtained by use of the received packet; and
transmitting (S15), by the communication device, the transmitting packet using a transfer route for the second private network when identification information of the certain application is associated with the transfer route for the second private network by a routing table, the routing table associating, for each of the plurality of networks, a transfer route that is used in the network with identification information of an application used for processing the packets received or transmitted in each of the plurality of networks.

4. The communication method according to claim 3, wherein
a first interface being connected to the first private network is associated with a first identification information that identifies a first application used in the first private network,
a second interface being connected to the second private network is associated with a second identification information that identifies a second application used in the second private network, the method comprising
transmitting (S15), by the communication device, referring to the routing table, the transmitting packet through the first interface when the certain application is the first application and through the second interface when the certain application is the second application.

5. A communication program that causes a communication device (10) connected to a plurality of networks to execute a process comprising:
receiving (S1) a packet from one of the plurality of networks, the plurality of networks including a first private network (60) and a second private network (70), the first private network and the second private network having an identical network address;
identifying, by a communication processing unit (20) in the communication device, a first application to be used to process the data included in the received packet based on a physical interface used for receiving the packet and a logical port number,
outputting, by the communication processing unit in the communication device, the received packet to a data processing unit that realizes processing with the first application;
identifying, by a data processing unit (30) in the communication device, a location of a first device that has transmitted the packet received from the first private network by processing (S4) data included in the received packet;
identifying, by the data processing unit (30), a second device to which data obtained by use of the received packet is to be relayed, on the basis of the location of the first device;
identifying (S11), by the data processing unit (30), a certain application used in a network including the second device;
generating (S14) a transmitting packet including the data obtained by use of the received packet; and
transmitting (S15) the transmitting packet using a transfer route for the second private network when identification information of the certain application is associated with the transfer route for the second private network by a routing table, the routing table associating, for each of the plurality of networks, a transfer route that is used in the network with identification information of an application used for processing the packets received or transmitted in each of the plurality of networks.

6. The communication program according to claim 5, wherein
a first interface being connected to the first private network is associated with a first identification information that identifies a first application used in the first private network,
a second interface being connected to the second private network is associated with a second identification information that identifies a second application used in the second private network,
the process comprises transmitting (S15), referring to the routing table, the transmitting packet through the first interface when the certain application is the first application and through the second interface when the certain application is the second application.

## Patentansprüche

1. Kommunikationsvorrichtung (10), umfassend:
einen Empfänger (23), der ein Paket von einem aus einer Vielzahl von Netzwerken empfängt, wobei die Vielzahl von Netzwerken ein erstes privates Netzwerk (60) und ein zweites privates Netzwerk (70) aufweist;
eine Kommunikationsverarbeitungseinheit (20), die eine erste Anwendung identifiziert, die zu verwenden ist, um die in dem empfangenen Paket vorhandenen Daten, basierend auf einer zum Empfangen des Pakets verwendeten physischen Schnittstelle und einer logischen Portnummer zu verarbeiten, und die das empfangene Paket an eine Datenverarbeitungseinheit ausgibt, die das Verarbeiten mit der ersten Anwendung umsetzt;
die Datenverarbeitungseinheit (30), die durch Verarbeiten von in dem empfangenen Paket enthaltenen Daten einen Ort einer ersten Vorrichtungs identifiziert, das das empfangene Paket von dem ersten privaten Netzwerk übertragen hat, die auf der Basis des Orts der ersten Vorrichtung eine zweite Vorrichtung identifiziert, an das durch Verwendung des empfangenen Pakets erhaltene Daten weiterzuleiten sind, und die eine gewisse, zur Verarbeitung der in einem die zweite Vorrichtung aufweisenden Netzwerk empfangenen oder übertragenen Pakete verwendete Anwendung identifiziert;
eine Routingtabelle (25), die, für jedes der Vielzahl von Netzwerken, eine Transferroute, die in dem Netzwerk verwendet wird, zu der Identifikationsinformation einer zum Verarbeiten der in jedem aus der Vielzahl von Netzwerken empfangenen oder übertragenen Pakete verwendeten Anwendung zuordnet, wobei das erste private Netzwerk und das zweite private Netzwerk eine identische Netzwerkadresse aufweisen; und
einen Übertrager (22), der ein Übertragungspaket erzeugt, das die durch Verwendung des empfangenen Pakets erhaltenen Daten aufweist, und das Übertragungspaket unter Verwenden einer Transferroute für das zweite private Netzwerk überträgt, wenn die Identifikationsinformation der gewissen Anwendung zu der Transferroute für das zweite private Netzwerk durch die Routingtabelle zugeordnet ist.

2. Kommunikationsvorrichtung nach Anspruch 1, umfassend eine erste Schnittstelle und eine zweite Schnittstelle, wobei die erste Schnittstelle mit dem ersten privaten Netzwerk verbunden ist und die zweite Schnittstelle mit dem zweiten privaten Netzwerk verbunden ist, wobei
die erste Schnittstelle zu einer ersten Identifikationsinformation zugeordnet ist, die eine in dem ersten privaten Netzwerk verwendete erste Anwendung identifiziert,
die zweite Schnittstelle zu einer zweiten Identifikationsinformation zugeordnet ist, die eine in dem zweiten privaten Netzwerk verwendete zweite Anwendung identifiziert, und
der Übertrager (22) auf die Routingtabelle Bezug nimmt, um das Übertragungspaket durch die erste Schnittstelle zu übertragen, wenn die gewisse Anwendung die erste Anwendung ist, und um das Übertragungspaket durch die zweite Schnittstelle zu übertragen, wenn die gewisse Anwendung die zweite Anwendung ist.

3. Kommunikationsverfahren, umfassend:
Empfangen (S1), durch eine mit einer Vielzahl von Netzwerken verbundene Kommunikationsvorrichtung (10), eines Pakets von einem aus der Vielzahl von Netzwerken, wobei die Vielzahl von Netzwerken ein erstes privates Netzwerk (60) und ein zweites privates Netzwerk (70) aufweisen, wobei das erste private Netzwerk und das zweite private Netzwerk eine identische Netzwerkadresse aufweisen;
Identifizieren, durch eine Kommunikationsverarbeitungseinheit (20) in der Kommunikationsvorrichtung, einer ersten Anwendung, die zu verwenden ist, um die in dem empfangenen Paket enthaltenen Daten, basierend auf einer zum Empfangen des Pakets verwendeten physischen Schnittstelle und einer logischen Portnummer zu verarbeiten,
Ausgeben, durch die Kommunikationsverarbeitungseinheit in der Kommunikationsvorrichtung, des empfangenen Pakets an eine Datenverarbeitungseinheit, die das Verarbeiten mit der ersten Anwendung umsetzt;
Identifizieren, durch eine Datenverarbeitungseinheit (30) in der Kommunikationsvorrichtung, eines Orts einer ersten Vorrichtung, die das empfangene Paket von dem ersten privaten Netzwerk übertragen hat, durch Verarbeiten (S4) von im empfangenen Paket vorhandenen Daten;
Identifizieren, durch die Datenverarbeitungseinheit (30), einer zweiten Vorrichtung, an die durch Verwendung des empfangenen Pakets aufweisende Daten weiterzuleiten sind, auf der Basis des Orts der ersten Vorrichtung;
Identifizieren (S11), durch die Datenverarbeitungseinheit (30), einer gewissen, in einem die zweite Vorrichtung aufweisenden Netzwerk verwendeten Anwendung;
Erzeugen (S14), durch die Kommunikationsvorrichtung, eines Übertragungspakets, das die durch Verwendung des empfangenen Pakets erhaltenen Daten aufweist; und
Übertragen (S15), durch das Kommunikationsvorrichtung, des Übertragungspakets unter Verwenden einer Transferroute für das zweite private Netzwerk, wenn die Identifikationsinformation der gewissen Anwendung zu der Transferroute für das zweite private Netzwerk durch eine Routingtabelle zugeordnet ist, wobei die Routingtabelle, für jedes aus der Vielzahl von Netzwerken, eine Transferroute, die in dem Netzwerk verwendet wird, zur Identifikationsinformation einer zum Verarbeiten der in jedem aus der Vielzahl von Netzwerken empfangenen oder übertragenen Pakete verwendeten Anwendung zuordnet.

4. Kommunikationsverfahren nach Anspruch 3, wobei
eine erste Schnittstelle, die mit dem ersten privaten Netzwerk verbunden ist, zur ersten Identifikationsinformation zugeordnet ist, die eine im ersten privaten Netzwerk verwendete erste Anwendung identifiziert,
eine zweite Schnittstelle, die mit dem zweiten privaten Netzwerk verbunden ist, zur zweiten Identifikationsinformation zugeordnet ist, die eine im zweiten privaten Netzwerk verwendete zweite Anwendung identifiziert, wobei das Verfahren umfasst
Übertragen (S15), durch die Kommunikationsvorrichtung, bezugnehmend auf die Routingtabelle, des Übertragungspakets durch die erste Schnittstelle, wenn die gewisse Anwendung die erste Anwendung ist, und durch die zweite Schnittstelle, wenn die gewisse Anwendung die zweite Anwendung ist.

5. Kommunikationsprogramm, das ein mit einer Vielzahl von Netzwerken verbundene Kommunikationsvorrichtung (10) veranlasst, einen Prozess auszuführen, umfassend:
Empfangen (S1) eines Pakets von einem aus der Vielzahl von Netzwerken, wobei die Vielzahl von Netzwerken ein erstes privates Netzwerk (60) und ein zweites privates Netzwerk (70) aufweist, wobei das erste private Netzwerk und das zweite private Netzwerk eine identische Netzwerkadresse aufweisen;
Identifizieren, durch eine Kommunikationsverarbeitungseinheit (20) in der Kommunikationsvorrichtung, einer ersten Anwendung, die zu verwenden ist, um die im empfangenen Paket aufweisenden Daten, basierend auf einer zum Empfangen des Pakets verwendeten physischen Schnittstelle und einer logischen Portnummer, zu verarbeiten,
Ausgeben, durch die Kommunikationsverarbeitungseinheit in der Kommunikationsvorrichtung, des empfangenen Pakets an eine Datenverarbeitungseinheit, die das Verarbeiten mit der ersten Anwendung umsetzt;
Identifizieren, durch eine Datenverarbeitungseinheit (30) in der Kommunikationsvorrichtung, eines Orts eines ersten Vorrichtung, das das empfangene Paket vom ersten privaten Netzwerk übertragen hat, durch Verarbeiten (S4) von im empfangenen Paket aufweisenden Daten;
Identifizieren, durch die Datenverarbeitungseinheit (30), einer zweiten Vorrichtung, an die durch Verwendung des empfangenen Pakets erhaltene Daten weiterzuleiten sind, auf der Basis des Orts des ersten Vorrichtung;
Identifizieren (S11), durch die Datenverarbeitungseinheit (30), einer gewissen in einem die zweite Vorrichtung aufweisenden Netzwerk verwendeten Anwendung;
Erzeugen (S14) eines Übertragungspakets, das die durch Verwendung des empfangenen Pakets erhaltenen Daten aufweist; und
Übertragen (S15) des Übertragungspakets unter Verwenden einer Transferroute für das zweite private Netzwerk, wenn die Identifikationsinformation der gewissen Anwendung zur Transferroute für das zweite private Netzwerk durch eine Routingtabelle zugeordnet ist, wobei die Routingtabelle, für jedes aus der Vielzahl von Netzwerken, eine Transferroute, die im Netzwerk verwendet wird, zur Identifikationsinformation einer zum Verarbeiten der in jedem aus der Vielzahl von Netzwerken empfangenen oder übertragenen Pakete verwendeten Anwendung zuordnet.

6. Kommunikationsprogramm nach Anspruch 5, wobei
eine erste Schnittstelle, die mit dem ersten privaten Netzwerk verbunden ist, zur ersten Identifikationsinformation zugeordnet ist, die eine im ersten privaten Netzwerk verwendete erste Anwendung identifiziert,
eine zweite Schnittstelle, die mit dem zweiten privaten Netzwerk verbunden ist, zur zweiten Identifikationsinformation zugeordnet ist, die eine im zweiten privaten Netzwerk verwendete zweite Anwendung identifiziert,
der Prozess umfassend das Übertragen (S15), bezugnehmend auf die Routingtabelle, des Übertragungspakets durch die erste Schnittstelle, wenn die gewisse Anwendung die erste Anwendung ist, und durch die zweite Schnittstelle, wenn die gewisse Anwendung die zweite Anwendung ist.

## Revendications

1. Dispositif de communication (10) comprenant :
un récepteur (23) qui reçoit un paquet en provenance d'un d'une pluralité de réseaux, la pluralité de réseaux incluant un premier réseau privé (60) et un second réseau privé (70) ;
une unité de traitement de communication (20) qui identifie une première application à utiliser pour traiter les données incluses dans le paquet reçu sur la base d'une interface physique utilisée pour recevoir le paquet et d'un numéro de port logique et qui délivre le paquet reçu à une unité de traitement de données qui réalise un traitement avec la première application ;
l'unité de traitement de données (30) qui identifie un emplacement d'un premier dispositif ayant transmis le paquet reçu en provenance du premier réseau privé par le traitement de données incluses dans le paquet reçu, qui identifie un second dispositif vers lequel des données obtenues par l'utilisation du paquet reçu doivent être relayées, sur la base de l'emplacement du premier dispositif, et qui identifie une certaine application utilisée pour le traitement des paquets reçus ou transmis dans un réseau incluant le second dispositif ;
une table d'acheminement (25) qui associe, pour chacun de la pluralité de réseaux, un itinéraire de transfert qui est utilisé dans le réseau avec des informations d'identification d'une application utilisée pour le traitement des paquets reçus ou transmis dans chacun de la pluralité de réseaux, le premier réseau privé et le second réseau privé ayant une adresse de réseau identique ; et
un émetteur (22) qui génère un paquet de transmission comprenant les données obtenues par l'utilisation du paquet reçu et transmet le paquet de transmission en utilisant un itinéraire de transfert pour le second réseau privé lorsque des informations d'identification de la certaine application sont associées à l'itinéraire de transfert pour le second réseau privé par la table d'acheminement.

2. Dispositif de communication selon la revendication 1, comprenant une première interface et une seconde interface, la première interface étant reliée au premier réseau privé, et la seconde interface étant reliée au second réseau privé, dans lequel
la première interface est associée à des premières informations d'identification qui identifient une première application utilisée dans le premier réseau privé,
la seconde interface est associée à des secondes informations d'identification qui identifient une seconde application utilisée dans le second réseau privé, et
l'émetteur (22) se réfère à la table d'acheminement de manière à transmettre le paquet de transmission par l'intermédiaire de la première interface lorsque la certaine application est la première application et à transmettre le paquet de transmission par l'intermédiaire de la seconde interface lorsque la certaine application est la seconde application.

3. Procédé de communication comprenant :
la réception (S1), par un dispositif de communication (10) relié à une pluralité de réseaux, d'un paquet en provenance d'un de la pluralité de réseaux, la pluralité de réseaux comprenant un premier réseau privé (60) et un second réseau privé (70), le premier réseau privé et le second réseau privé ayant une adresse de réseau identique ;
l'identification, par une unité de traitement de communication (20) dans le dispositif de communication, d'une première application à utiliser pour traiter les données incluses dans le paquet reçu sur la base d'une interface physique utilisée pour recevoir le paquet et d'un numéro de port logique,
la délivrance, par l'unité de traitement de communication dans le dispositif de communication, du paquet reçu à une unité de traitement de données qui réalise un traitement avec la première application ;
l'identification, par une unité de traitement de données (30) dans le dispositif de communication, d'un emplacement d'un premier dispositif ayant transmis le paquet reçu en provenance du premier réseau privé par le traitement (S4) de données incluses dans le paquet reçu ;
l'identification, par l'unité de traitement de données (30), d'un second dispositif vers lequel des données obtenues par l'utilisation du paquet reçu doivent être relayées, sur la base de l'emplacement du premier dispositif ;
l'identification (S11), par l'unité de traitement de données (30), d'une certaine application utilisée dans un réseau comprenant le second dispositif ;
la génération (S14), par le dispositif de communication, d'un paquet de transmission comprenant les données obtenues par l'utilisation du paquet reçu ; et
la transmission (S15), par le dispositif de communication, du paquet de transmission en utilisant un itinéraire de transfert pour le second réseau privé lorsque des informations d'identification de la certaine application sont associées à l'itinéraire de transfert pour le second réseau privé par une table d'acheminement, la table d'acheminement associant, pour chacun de la pluralité de réseaux, un itinéraire de transfert qui est utilisé dans le réseau avec des informations d'identification d'une application utilisée pour le traitement des paquets reçus ou transmis dans chacun de la pluralité de réseaux.

4. Procédé de communication selon la revendication 3, dans lequel
une première interface étant reliée au premier réseau privé est associée à des premières informations d'identification qui identifient une première application utilisée dans le premier réseau privé,
une seconde interface étant reliée au second réseau privé est associée à des secondes informations d'identification qui identifient une seconde application utilisée dans le second réseau privé, le procédé comprenant
la transmission (S15), par le dispositif de communication, en se référant à la table d'acheminement, du paquet de transmission par l'intermédiaire de la première interface lorsque la certaine application est la première application et par l'intermédiaire de la seconde interface lorsque la certaine application est la seconde application.

5. Programme de communication qui amène un dispositif de communication (10) relié à une pluralité de réseaux à exécuter un procédé comprenant :
la réception (S1) d'un paquet en provenance d'un de la pluralité de réseaux, la pluralité de réseaux comprenant un premier réseau privé (60) et un second réseau privé (70), le premier réseau privé et le second réseau privé ayant une adresse de réseau identique ;
l'identification, par une unité de traitement de communication (20) dans le dispositif de communication, d'une première application à utiliser pour traiter les données incluses dans le paquet reçu sur la base d'une interface physique utilisée pour recevoir le paquet et d'un numéro de port logique,
la délivrance, par l'unité de traitement de communication dans le dispositif de communication, du paquet reçu à une unité de traitement de données qui réalise un traitement avec la première application ;
l'identification, par une unité de traitement de données (30) dans le dispositif de communication, d'un emplacement d'un premier dispositif ayant transmis le paquet reçu en provenance du premier réseau privé par le traitement (S4) de données incluses dans le paquet reçu ;
l'identification, par l'unité de traitement de données (30), d'un second dispositif vers lequel des données obtenues par l'utilisation du paquet reçu doivent être relayées, sur la base de l'emplacement du premier dispositif ;
l'identification (S11), par l'unité de traitement de données (30), d'une certaine application utilisée dans un réseau comprenant le second dispositif ;
la génération (S14) d'un paquet de transmission comprenant les données obtenues par l'utilisation du paquet reçu ; et
la transmission (S15) du paquet de transmission en utilisant un itinéraire de transfert pour le second réseau privé lorsque des informations d'identification de la certaine application sont associées à l'itinéraire de transfert pour le second réseau privé par une table d'acheminement, la table d'acheminement associant, pour chacun de la pluralité de réseaux, un itinéraire de transfert qui est utilisé dans le réseau avec des informations d'identification d'une application utilisée pour le traitement des paquets reçus ou transmis dans chacun de la pluralité de réseaux.

6. Programme de communication selon la revendication 5, dans lequel
une première interface étant reliée au premier réseau privé est associée à des premières informations d'identification qui identifient une première application utilisée dans le premier réseau privé,
une seconde interface étant reliée au second réseau privé est associée à des secondes informations d'identification qui identifient une seconde application utilisée dans le second réseau privé,
le procédé comprenant la transmission (S15), en se référant à la table d'acheminement, du paquet de transmission par l'intermédiaire de la première interface lorsque la certaine application est la première application et par l'intermédiaire de la seconde interface lorsque la certaine application est la seconde application.
